# EUROPEAN PATENT SPECIFICATION

(11) **EP 0 650 885 B1**
(45) Date of publication and mention of the grant of the patent: **02.01.1997**
(21) Application number: 94202962.0
(22) Date of filing: 13.10.1994
(51) Int. Cl.: B62J 17/04, F16B 7/14, B62K 19/36, B62K 21/12

(54) **Quick-fixing device for accessories in a two-wheel vehicle, in particular for windscreens**
Vorrichtung zur Befestigung eines Zubehörs, insbesondere einer Windschutzscheibe eines Zweirad-Fahrzeuges
Dispositif de fixation d'un accessoire, notamment d'un pare-brise d'un véhicule à deux roues

(30) Priority: 27.10.1993 IT MI932280
(43) Date of publication of application: 03.05.1995
(73) Proprietor: PIAGGIO VEICOLI EUROPEI S.p.A., 56025 Pontedera (Pisa) (IT)
(72) Inventor: Funari, Alceste, I-57127 Livorno (IT)
(74) Representative: Fusina, Gerolamo

(56) References cited:
- DE-A- 4 019 739
- DE-C- 876 164
- FR-A- 2 567 212
- GB-A- 2 263 259

## Description

This invention relates to a quick-fixing device for connecting accessories in a two-wheel vehicle, in particular for windscreens.

Connection devices of various types are used for positioning accessories, such as a windscreen, on a two-wheel vehicle. These connection devices of known type consist of conical connectors fixed at one end to the handlebar by studs or bolts and at the other end to the windscreen via sleeve elements also fixable by bolts. To mount other accessories such as parcel racks, rearview mirrors etc., connection devices are used consisting of a plurality of component parts also to be fixed by one or more bolts.

These known devices are firstly of fairly high price because of their rather complex construction. In addition their positioning requires spanners and similar tools, in addition to a certain time for arranging the parts and fixing them together.

DE-C-876164 relates a device according to the preamble of claim 1. Although in this prior art device the need of a tool is eliminated, the device appears to be complicated and, because of the structure of the operating lever, not very efficient.

FR-A-2567212 shows a device for the assembly of elements which uses expandable elements.

An object of the present invention is to provide a quick-fixing device which enables an accessory, such as a windscreen, to be efficiently and almost immediately mounted on part of the vehicle structure, such as the handlebar.

A further object is to provide a quick-fixing device which is of extremely simple construction, leading to a reduction in manufacturing costs.

These objects are attained according to the present invention by a quick-fixing device according to claim 1.

The structural and operational characteristics and advantages of a fixing device according to the present invention will be more apparent from the following description given by way of non-limiting example with reference to the accompanying drawings, in which:
Figure 1 is a section through a first embodiment of a quick-fixing device of the present invention in its mounted and locked position;
Figure 2 is a section through the device of Figure 1 in its unlocked position;
Figure 3 is a plan view of the device in the direction of the arrow F of Figure 1;
Figure 4 is a section through a second embodiment of a quick-fixing device of the present invention in its mounted and locked position;
Figure 5 is a section through the device of Figure 4 in its unlocked position;
Figure 6 is a plan view of the device in the direction of the arrow H of Figure 4; and
Figure 7 is an end portion of a further embodiment of the device according to the invention.

The figures show a series of embodiments, according to the present invention, of a quick-fixing device for connecting accessories in a two-wheel vehicle.

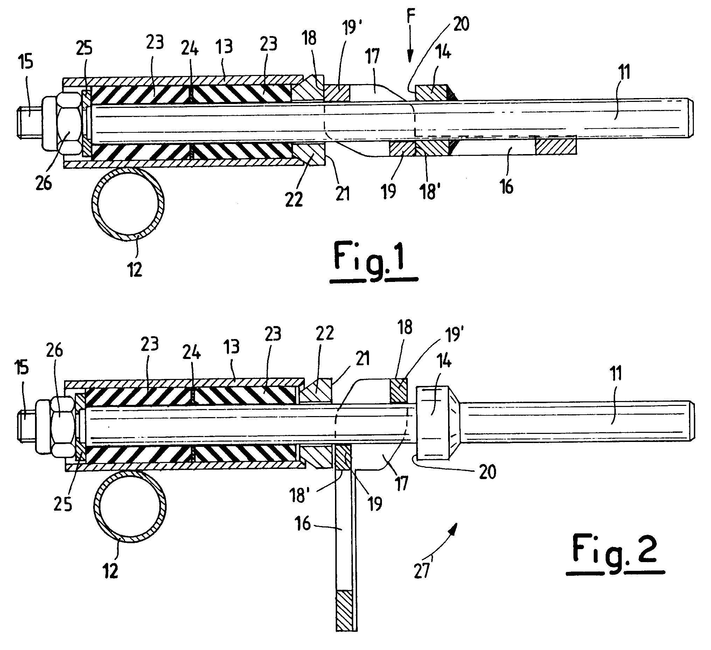

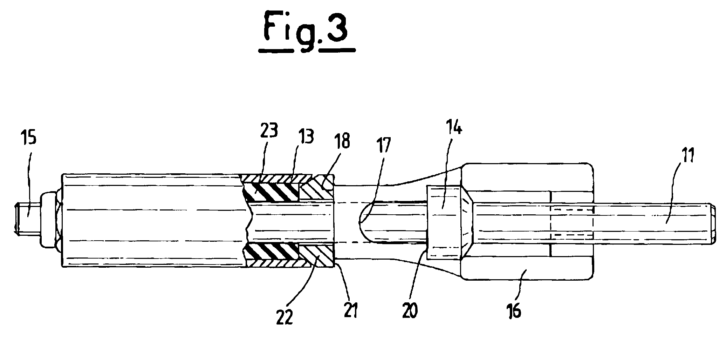

Specifically, Figures 1 to 3 show a first embodiment of a device for fixing the rod 11 of a windscreen, not shown, to a handlebar indicated schematically at 12.

A tubular element or sleeve 13 into which that end of the rod 11 provided with expandable elements can be inserted is securely fixed to the handlebar 12, for example by welding.

This end is defined by an annular element 14 welded onto the rod 11 a certain distance from its free end, which comprises a thread 15. Between the annular element 14 and the threaded end 15 there is mounted on the rod 11 a lever 16 comprising in one end a cavity 17 within which the rod 11 passes. At this end provided with the cavity 17 the lever 16 has a rectangular-shaped longitudinal section. Two pairs of surfaces 18, 18' and 19, 19' are arranged, the ones perpendicular to the others, to act respectively against that flat surface 20 of the annular element 14 facing the free end of the rod and a flat surface 21 of a frusto-conical ring 22, acting as a thrust means, and mounted on the rod on the other side.

On the rod 11 there are also mounted in succession, as expandable elements, a pair of centrally holed plugs 23 between which there is a washer 24. Finally there are mounted a further washer 25 and a nut 26 positionable on the threaded end 15.

When the device is in its rest position, shown in Figure 2, the nut 26 retains all the aforesaid elements on the end of the rod 11 below the annular element 14, the lever 16 being rotated so that its flat surfaces 19 and 19', forming the major sides of the rectangle and hence positioned the lesser distance apart, face the flat surface 20 of the annular element and the flat surface 21 of the frusto-conical ring 22. When in this position the shaped portion of the lever does not compress the frusto-conical ring 22 against the plugs 23, these therefore being at rest.

The plugs 23, together with the washers 24 and 25 and the minor-diameter end of the frusto-conical ring 22, have an outer circumference smaller than the inner circumference of the tubular element or sleeve 13. Because of this they can be freely inserted into the tubular element or extracted from it.

To mount the accessory, in this case the windscreen rod 11, on the handlebar 12 of the two-wheel vehicle, the described parts arranged in their unloaded rest state as shown in Figure 2 are inserted into the sleeve 13.

Maintaining the assembly positioned in this manner, the lever 16 is rotated anticlockwise in accordance with the arrow 27 of Figure 2 until it is in a position alongside the rod as shown in Figure 1.

In this manner those surfaces 18 and 18' of the shaped end of the lever which are the greater distance apart act respectively against the flat surface 21 of the frusto-conical ring 22 and against the flat surface 20 of the annular element 14 with the result that they withdraw from each other. This forced withdrawal causes the other end of the frusto-conical ring 22 inside the sleeve 13 to press against the plugs 23. However these plugs, which are retained by the end washer 25, expand to lock against the interior of the sleeve 13 and hence render the rod 11 rigid with the vehicle structure 12.

In this manner the fixing device according to the present invention allows virtually immediate mounting and/or removal of an accessory such as a windscreen on or from a vehicle structure without the use of any additional implement.

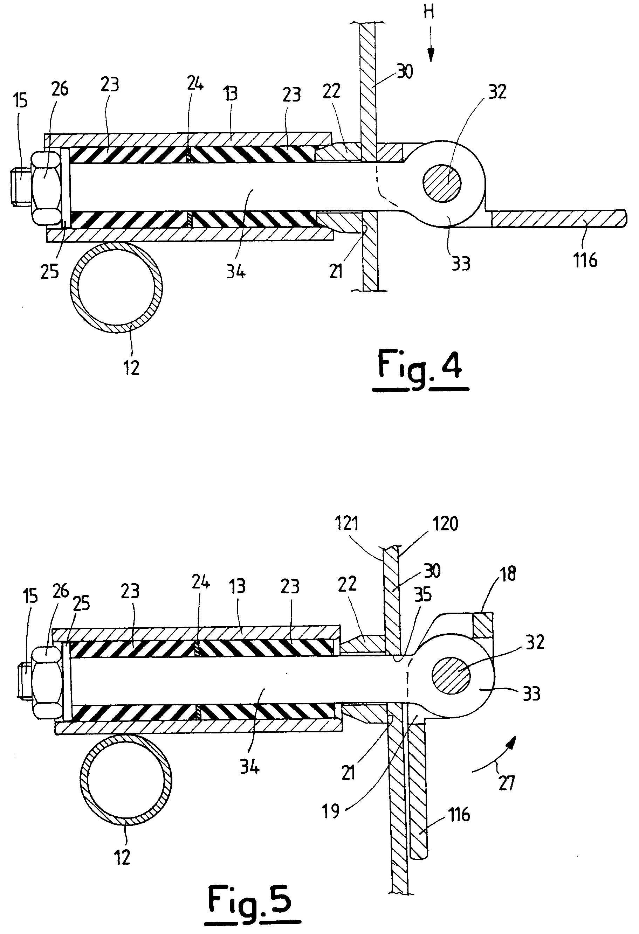

Figures 4 to 6 show a second embodiment of a fixing device according to the invention.

In this second embodiment there is again a tubular element 13 fixed or welded to portion of the vehicle structure, such as the handlebar 12. In this case the accessory extends from a plate, indicated schematically at 30, on U-shaped extensions 31 of which there is pivoted a lever 116 similar to that of the preceding embodiment, by means of a pin 32. This lever is also shaped in the manner of the preceding lever 16 and is provided with surfaces 18 and 19, the first 18 being more distant from the centre of the pin 32 than the second 19. In this case when the lever 116 is rotated the operating surfaces 18 and 19 become positioned facing the plate 30. This shaped hollow region of the lever 116 comprises a through hole to receive the pin 32 and enable it to rotate.

The pin 32 is also inserted into an eyelet 33 provided at one end of a rod portion 34. On this latter rod portion 34, which passes through a hole 35 provided in the plate 30, there are mounted as in the preceding embodiment the frusto-conical ring 22, the pair of plugs 23 with the interposed washer 24 and the washer 25, and the end nut 26 screwed onto the threaded end 15 of the rod portion 34.

In this case the surfaces 18 and 19 of the lever 116 face and engage a first surface 120 of the plate 30, whereas the flat surface 21 of the frusto-conical ring 22 faces and engages a second surface 121 of the plate 30.

To pass from the unlocked position of the device shown in Figure 5, in which the lever 116 is rotated such that it lies alongside the first surface 120 of the plate, to the locked position the lever has to be rotated in the direction of the arrow 27 of Figure 5.

As a result of this the surface 18 engages the surface 120 of the plate, which thus moves away from the pin 32. The plate then urges the frusto-conical ring so that it acts against the plugs 23 to compress them and cause them to expand within the sleeve 13.

In this manner the device of the invention assumes the expanded position to achieve quick-fixing of the accessory element 30 to the vehicle structure.

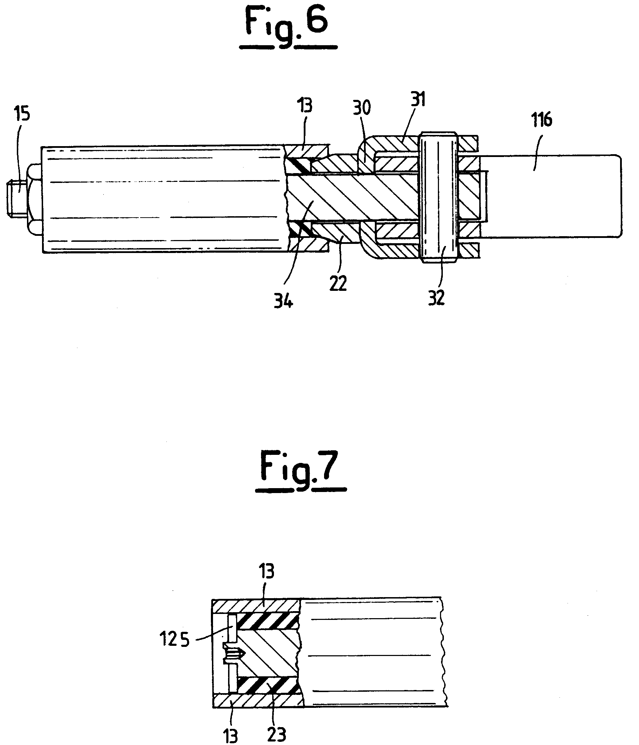

Figure 7 shows how the plugs can be locked against the rod 11 or against the rod portion 34 simply by means of a washer 125 fixed permanently in position by clinching or the like.

In the two illustrated embodiments it can be seen that by acting respectively against the annular element 14 and against the plate 30, the lever 16 or 116 causes the frusto-conical ring 22 to move with consequent thrusting and expansion of the plugs 23.

The purpose of the washer 24 is to divide the load between the two plugs 23 to consequently achieve improved locking of the device within the sleeve 13. The plugs can also be other than two in number and are used not only for locking purposes but also for damping any vibration induced by the vehicle.

It is interesting to note that the presence of the frusto-conical ring 22 in both embodiments of the quick-fixing device of the present invention ensures correct centering and alignment of the device.

## Claims

1. A quick-fixing device for connecting accessories in a two-wheel vehicle, in particular for windscreens, comprising a sleeve element (13) to be fixed to a two-wheel vehicle structure, in particular to the handlebar (12), at least one rod portion (11;34), to be inserted into said sleeve element (23), carrying expandable elements which are operable by a lever (16;116) associated with a relative thrust ring (22) between an expanded position of engagement with the interior of said sleeve element (13) and a rest position in which said rod portion is withdrawable from said sleeve element (13), at one end, on said rod portion (11;34), said expandable elements (23) being provided with elements (15,25,26;125) for restraining their axial movement and at the other end being provided with said thrust ring (22) operable by said lever (16;116), characterised in that said lever (16;116) comprises at one end a cavity (17) within which said rod portion (11;34) passes and said one end of said lever (16;116) is provided with at least one pair of mutually perpendicular surfaces (18,18'; 19,19') positioned at different distances from the centre of said cavity (17), said surfaces of said lever interacting between a widened annular element (14) provided on said rod portion (11;34) and said thrust ring (22) in order to displace said expandable elements (23) between said expanded position and rest position.

2. A fixing device as claimed in claim 1, characterised in that said expandable elements (23) consist of at least one centrally holed plug mounted on said at least one rod portion (11; 34).

3. A fixing device as claimed in claim 1, characterised in that said thrust ring (22) is of frusto-conical shape at that end facing said sleeve element (13).

4. A fixing device as claimed in claim 1, characterised in that between said lever (16;116) and said thrust ring (22) there is interposed a plate (30,31) to which an accessory can be fixed.

5. A fixing device as claimed in claim 1, characterised in that said rod portion (11) extends into a rod of an accessory.

6. A fixing device as claimed in claim 1, characterised in that said end of said lever (16;116) is of rectangular shape in longitudinal section.

## Patentansprüche

1. Schnellbefestigungsvorrichtung zum Verbinden von Zubehör an einem Zweiradfahrzeug, insbesondere für Windschutzscheiben, die aufweist: ein an einer Zweirad-Fahrzeugkonstruktion, insbesondere an dem Lenker (12), zu befestigendes Hülsenelement (13), mindestens einen in das Hülsenelement einzusetzenden Stangenabschnitt (11; 34), der dehnbare Elemente (23) trägt, die durch einen zu einem relativen Druckring (22) zugehörigen Hebel (16; 116) zwischen einer gedehnten Eingriffsposition mit dem Inneren des Hülsenelements (13) und einer Ruheposition bedienbar sind, in der der Stangenabschnitt aus dem Hülsenelement (13) herausziehbar ist, wobei an einem Ende an dem Stangenabschnitts (11; 34) die dehnbaren Elemente (23) mit Elementen (15, 25, 26; 125) zum Unterdrücken ihrer Axialbewegung versehen sind und an dem anderen Ende mit dem durch den Hebel (16; 116) bedienbaren Druckring (22) versehen sind,
dadurch gekennzeichnet, daß der Hebel (16; 116) an einem Ende einen Hohlraum (17) aufweist, in dem der Stangenabschnitt (11; 34) durchläuft, und das eine Ende des Hebels (16; 116) mit mindestens einem Paar zueinander senkrechten Oberflächen (18, 18'; 19, 19') versehen ist, die in unterschiedlichen Entfernungen von der Mitte des Kohlraums (17) positioniert sind, wobei die Oberflächen des Hebels Zwischen einem an dem Stangenabschnitt (11; 34) vorgesehenen geweiteten ringförmigen Element (14) und dem Druckring (22) zusammenwirken, um die dehnbaren Elemente (23) zwischen der gedehnten Position und der Ruheposition zu verschieben.

2. Befestigungsvorrichtung nach Anspruch 1, dadurch gekennzeichnet, daß die dehnbaren Elemente (23) aus mindestens einem mittig gelochten Stopfen bestehen, der an dem mindestens einen Stangenabschnitt (11; 34) angebracht ist.

3. Befestigungsvorrichtung nach Anspruch 1, dadurch gekennzeichnet, das der Druckring (22) eine Kegelstumpfform an dem Ende hat, das zu dem Hülsenelement (13) weist.

4. Befestigungsvorrichtung nach Anspruch 1, dadurch gekennzeichnet, daß zwischen dem Hebel (16; 116) und dem Druckring (22) eine Platte (30, 31) eingefügt ist, an der ein Zubehör befestigt werden kann.

5. Befestigungsvorrichtung nach Anspruch 1, dadurch gekennzeichnet, das der Stangenabschnitt (11) in eine Stange eines Zubehörs verläuft.

6. Befestigungsvorrichtung nach Anspruch 1, dadurch gekennzeichnet, daß das Ende des Hebels (16; 116) eine rechtwinklige Form im Längsschnitt hat.

## Revendications

1. Dispositif d'assemblage rapide permettant de fixer des accessoires sur un véhicule à deux roues, en particulier des pare-brise, comprenant un élément de manchon (13) destiné à être fixé à la structure d'un véhicule à deux roues, en particulier au guidon (12), au moins une partie de tige (11 ; 34), destinée à être introduite dans ledit élément de manchon (23), et portant des éléments dilatables qui peuvent être manoeuvrés par un levier (16 ; 116) associé à une bague de poussée relative (22) entre une position dilatée de blocage à l'intérieur dudit élément de manchon (13) et une position de repos dans laquelle ladite partie de tige peut être sortie dudit élément de manchon (13), au niveau d'une première extrémité de ladite partie de tige (11 ; 34), lesdits éléments dilatables (23) étant munis d'éléments (15, 25, 26 ; 125) servant à restreindre leur déplacement axial, et étant munis, à l'autre extrémité, de ladite bague de poussée (22) pouvant être manoeuvrée par ledit levier (16 ; 116), caractérisé en ce que ledit levier (16 ; 116) comprend à une première extrémité une cavité (17) à l'intérieur de laquelle passe ladite partie de tige (11 ; 34), et en ce que ladite première extrémité dudit levier (16 ; 116) est munie d'au moins une paire de surfaces mutuellement perpendiculaires (18, 18' ; 19, 19') positionnées à des distances différentes du centre de ladite cavité (17), lesdites surfaces dudit levier agissant entre un élément annulaire élargi (14) disposé sur ladite partie de tige (11 ; 34) et ladite bague de poussée (22) afin de déplacer lesdits éléments dilatables (23) entre ladite position dilatée et ladite position de repos.

2. Dispositif d'assemblage selon la revendication 1, caractérisé en ce que lesdits éléments dilatables (23) sont constitués d'au moins un tampon percé en son centre, monté sur ladite partie de tige (11 ; 34).

3. Dispositif d'assemblage selon la revendication 1, caractérisé en ce que ladite bague de poussée (22) est de forme tronconique au niveau de son extrémité qui fait face audit élément de manchon (13).

4. Dispositif d'assemblage selon la revendication 1, caractérisé en ce qu'entre ledit levier (16 ; 116) et ladite bague de poussée (22) est interposée une plaque (30, 31) à laquelle un accessoire peut être fixé.

5. Dispositif d'assemblage selon la revendication 1, caractérisé en ce que ladite partie de tige (11) se prolonge pour former une tige d'un accessoire.

6. Dispositif d'assemblage selon la revendication 1, caractérisé en ce que ladite extrémité dudit levier (16; 116) est de forme rectangulaire en coupe longitudinale.
